# EUROPEAN PATENT SPECIFICATION

(11) **EP 2 549 519 B1**
(45) Date of publication and mention of the grant of the patent: **17.09.2014**
(21) Application number: 10847677.1
(22) Date of filing: 19.03.2010
(51) Int. Cl.: B82Y 20/00, C09K 11/77, G02B 5/00, G02B 5/02, H01J 29/20, C03C 4/12, H01J 63/04, H01J 63/06

(54) **Light-emitting element comprising a luminescent glass substrate**
Lichtemittierendes Element mit einem Lunineszenzglassubstrat
Élément électroluminescent comprenant un substrat verre luminescent

(43) Date of publication of application: 23.01.2013
(73) Proprietor: Ocean's King Lighting Science&Technology Co., Ltd., Guangdong 518054 (CN)
(72) Inventor: ZHOU, Mingjie, Guangdong 518054 (CN); MA, Wenbo, Guangdong 518054 (CN); LIU, Yugang, Guangdong 518054 (CN)
(74) Representative: Nevant, Marc
(86) International application number: PCT/CN2010/071154
(87) International publication number: WO 2011/113208

(56) References cited:
- WO-A2-01/39285
- CN-A- 101 202 419
- CN-A- 101 314 519
- CN-A- 101 373 222
- JP-A- 2006 259 064
- US-A- 5 558 554
- US-A- 5 814 934
- D. SHIFFLER ET AL.: 'Cathode and anode plasmas in short-pulse explosive field emission cathodes' JOURNAL OF APPLIED PHYSICS vol. 91, no. 9, 01 May 2002, pages 5599 - 5603

## Description

### Technical Field

The present invention belongs to the technical field of luminescent materials, and specifically relates to a light emitting element having a glass substrate as a luminescent material, and methods for manufacturing and luminescence thereof.

### Background Art

Publication CN 101 314 519 A discloses a light-emitting element comprising a luminescent glass substrate of particular interest.

Conventional materials used for luminescent matrix include fluorescent powders, nano-crystals, glasses, and the like. Comparing with crystals and fluorescent powders, glasses have transparency, hardness, as well as good chemical stability and optical properties. In addition, glasses may be readily processed into products with various sizes and shapes, such as display devices or illuminating sources with various sizes and shapes.

For example, in the field of vacuum microelectronics, field emissive devices normally utilize a luminescent glass as the luminescent body, which shows broad application prospect in fields such as illumination and displays, and has drawn great attention from research entities from home and abroad. The working mechanism of the field emissive devices is: under vacuum, a positive voltage is applied to the anode with respect to the field emissive arrays (FEAs) of the cathode to form an accelerating electric field, in which the electrons emitted from the cathode are accelerated to bombard the luminescent material on the anode sheet to emit a light. The field emissive devices have a broad working temperature range (-40°C - 80°C), a short response time (< 1 ms), simple structures, and power saving advantage, and therefore meet the requirements of environmental protection. In addition, fluorescent powder body, luminescent glass, luminescent film, etc. can also be used in the field emissive device as the luminescent material, but they all have the crucial disadvantage of low luminescent efficiency, which significantly restricts the applications of the field emissive device, especially in the illuminating field.

Metal structure-excited surface plasmon would increase the photonic mode density in its vicinity. When the luminescent centre of the luminescent matrix is within the action sphere of the surface plasmon field, its spontaneous radiation rate would increase, thereby increasing the internal quantum efficiency of the luminescent matrix. Meanwhile, the micro and nano structure of the metal would destruct the waveguide mode of the luminescent matrix, leading to radiation of the photons with an incident angle greater than the total internal reflection angle, and thereby increasing the light extraction efficiency of the luminescent matrix. However, the non-periodic metal structure has random configuration, poor controllability and consistency, low coupling efficiency between the photons radiated from the luminescent centre and the surface plasmon. Due to these problems, it shows limited improvement of the light extraction efficiency.

### Disclosure of the Invention

### Technical Problem

Accordingly, a light emitting element which has high luminescent homogeneity, high luminescent efficiency, good stability, and simple structure is provided.

Also provided is a simple and low-cost method for manufacturing the light emitting element.

Further provided is a luminescent method of the light emitting element which is simple, easy and reliable to operate, and significantly increases the luminescent efficiency of the luminescent material.

### Technical Solutions

A light emitting element is provided, which comprises a luminescent glass, wherein a metal layer is formed on the surface of the luminescent glass, the metal layer has a periodic micro and nano structure, and the chemical constituent of the luminescent glass is rare-earth-ion doped silicate.

Also provided is a method for manufacturing the light emitting element, comprising the following steps:
preparing a luminescent glass which has a smooth surface or has periodically arranged convexes and concaves on the surface;
forming a metal layer having a periodic micro and nano structure on the surface of the luminescent glass, to obtain the light emitting element.

Further provided is a luminescent method of the light emitting element, comprising the following steps:
obtaining a light emitting element according to the manufacturing method described above; and
irradiating the metal layer with cathode rays, forming surface plasmon between the metal layer and the luminescent glass under the excitation of cathode rays, and making the luminescent glass luminescent.

### Advantageous Effects

In the above light emitting element, by forming a metal layer having a periodic micro and nano structure on the luminescent glass, surface plasmon may be formed at the interface between the metal layer and the luminescent glass under the excitation of cathode rays. Due to the surface plasmon effect, the internal quantum efficiency of the luminescent glass is significantly increased, i.e. the spontaneous radiation of the luminescent glass is enhanced, which in turn significantly improves the luminescent efficiency of the luminescent glass, thereby solving the problem of low luminescent efficiency of the luminescent material. Meanwhile, the micro and nano structure of the metal layer would destruct the waveguide mode of the luminescent glass, leading to radiation of the photons with an incident angle greater than the total internal reflection angle. In other words, the light extraction efficiency of the luminescent glass is increased, which significantly increases the total luminescent efficiency of the luminescent glass. Accordingly, in the luminescent method of the light emitting element, it is only needed to irradiate the metal layer with cathode rays, and surface plasmon is formed between the metal layer and the luminescent glass, which significantly enhances the luminescent sufficiency of the luminescent glass, and improves its luminescent reliability. The light emitting element comprises a luminescent glass and a metal layer and this two-layer structure is simple. Meanwhile, a homogeneous interface is present between the luminescent glass and the metal layer. Therefore, the light emitting element shows very high luminescent homogeneity and stability. In the above method for manufacturing the light emitting element, it is only needed to form a metal layer on the luminescent glass to obtain the light emitting element. This manufacturing method is simple and low-cost, and therefore has a broad prospect in production and application.

### Brief Description of the Figures

The present invention will be described in detail referring to the Figures and Examples, in which:
Figure 1 is a structural scheme of a light emitting element in an embodiment of the present invention;
Figure 2: is a structural scheme of a light emitting element in an embodiment of the present invention wherein the metal layer is in the form of array;
Figure 3 is a structural scheme of a light emitting element in an embodiment of the present invention wherein the metal layer is in the form of triangle;
Figure 4 is a structural scheme of a light emitting element in an embodiment of the present invention wherein the metal layer is in the form of rectangle;
Figure 5 is a comparison of the luminescent spectra of the light emitting element obtained according to Example 1 as shown in Figure 3 and of a luminescent glass without a metal layer, the luminescent spectra are obtained on a Shimadzu RF-5301PC spectrometer as the detector under the excitation of cathode rays with 5KV accelerating voltage;
Figure 6 is a structural scheme of a light emitting element in an embodiment of the present invention wherein the metal layer is in the form of rectangle;
Figure 7 is a structural scheme of a light emitting element in an embodiment of the present invention wherein the metal layer is in the form of rectangle;
Figure 8 is a flow chart for a method for manufacturing the light emitting element in an embodiment of the present invention;
Figure 9 is a flow chart for a luminescent method of the light emitting element in an embodiment of the present invention.

### Specific Embodiments of the Present Invention

In order to make the technical problem to be solved, the technical solutions, and the advantageous effects of the present invention more explicit, the present invention will be described in detail by referring to the Examples. It shall be appreciated that the specific embodiments described herein are only for illustration of the present invention and shall not be construed to limit the present invention.

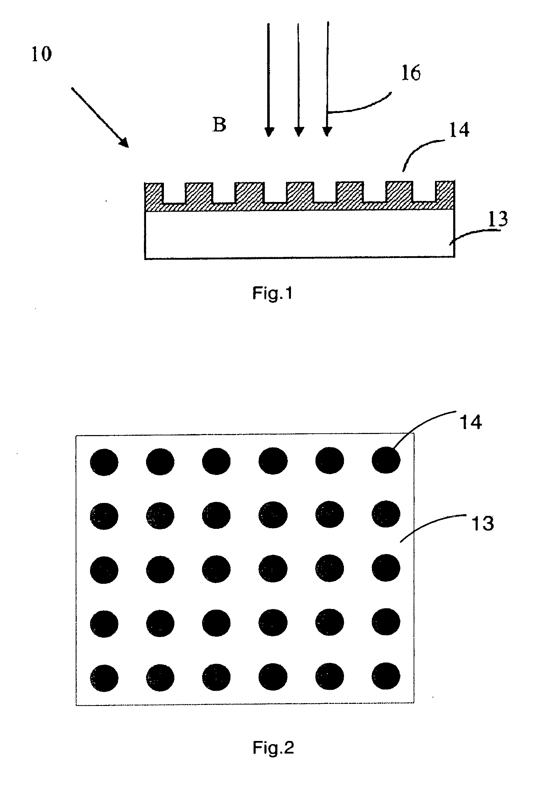

Refer to Figure 1, which shows the light emitting element 10 in an embodiment of the present invention, comprising a luminescent glass 13 and a metal layer 14 arranged on the surface of the luminescent glass 13. The luminescent glass 13 is rare-earth-ion doped silicate glass, and the metal layer 14 has a periodically arranged micro and nano structure.

As examples, the periodically arranged micro and nano structure of the metal layer 14 may be realized in the following ways:

In a first way, the periodic micro and nano structure of the metal layer 14 has periodically arranged convexes. The period for this periodic arrangement is the distance between the adjacent two smallest repeating units, which is the distance between the adjacent two convexes in the present embodiment. The distance between the two convexes, i.e. the period P, is preferably 50 nm - 3000 nm, more preferably 200 nm - 1200 nm. The width of the convexes and/or the spacing between two convexes is preferably 0.05P - 0.95P, most preferably 0.2P - 0.8P. The height of the convexes is preferably 0.5 nm - 200 nm, more preferably 1 nm - 100 nm. The thickness of the metal layer 14 at the bottom between two convexes (i.e. the metal layer part which connecting two adjacent convexes) is preferably 0 nm - 100 nm, more preferably 0 nm - 50 nm. The shape of the cross section of the convexes is preferably at least one of triangle, square, rectangle, diamond, circle, oval, semi-circle, ring, and irregular shapes.

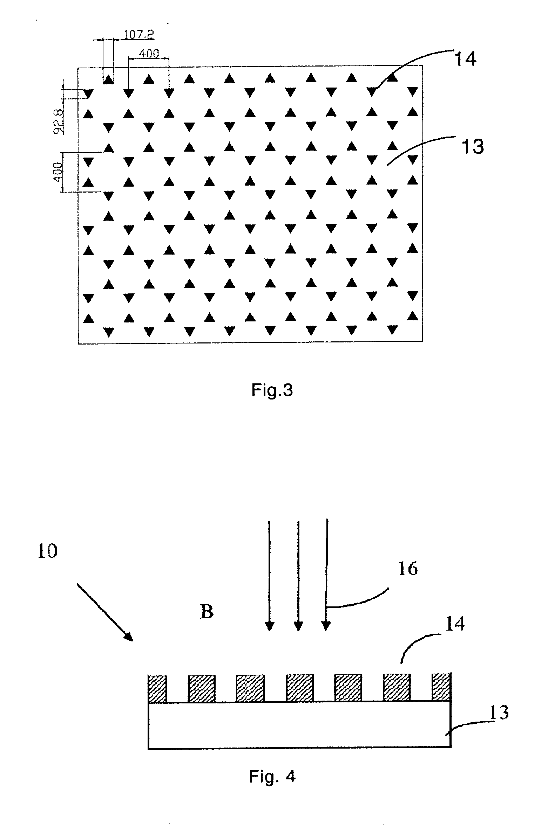

When the thickness of the metal layer 14 between the bottoms of two convexes is above 0 nm, the bottoms of the convexes are preferably connected by a metal layer 14 having a thickness of above 0 nm and below 100 nm, preferably above 0 nm and below 50 nm. When the thickness of the metal layer 14 between the bottoms of two convexes is 0 nm, the convexes are isolated from each other and periodically arranged on the surface of the luminescent glass, as shown in Figures 2, 3 and 4. In Figure 2, the thickness of the metal layer 14 between the bottoms of two convexes is 0 nm, the convexes have a shape of array and are periodically arranged on the surface of the luminescent metal 13. In Figure 3, the thickness of the metal layer 14 between the bottoms of two convexes is 0 nm, the convexes have a shape of triangle and are periodically arranged on the surface of the luminescent metal 13. In Figure 4, the thickness of the metal layer 14 between the bottoms of two convexes is 0 nm, and the convexes have a shape of circle, rectangle or square and are periodically arranged on the surface of the luminescent metal 13.

In a second way, the periodic micro and nano structure is a periodically arranged metal grating. The period for this periodic arrangement is the distance between the adjacent two smallest repeating units. The period P in the present embodiment is preferably 50 nm - 3000 nm, more preferably 200 nm - 1200 nm. The thickness of the metal layer 14 film is preferably above 0 nm and below 100 nm, more preferably above 0 nm and below 50 nm.

In a third way, the periodic micro and nano structure is a metal layer 14 film with periodically arranged holes thereon. The period for this periodic arrangement is the distance between the adjacent two smallest repeating units, which is the distance between the adjacent two holes in the present embodiment. The distance between the two holes, i.e. the period P is preferably 50 nm - 3000 nm, more preferably 200 nm - 1200 nm. The thickness of the metal layer 14 film is preferably above 0 nm and below 100 nm, more preferably above 0 nm and below 50 nm. The diameter of the holes is preferably 0.05P - 0.95P, more preferably 0.2P - 0.8P. The shape of the holes is preferably at least one of triangle, square, rectangle, diamond, circle, oval, semi-circle, ring, and irregular shapes. The depth of the holes may be equal to or less than the thickness of the metal layer 14.

In the fourth way, the luminescent glass 13 has periodically arranged convexes and concaves on the surface, and the surface of the convexes and/or the concaves is coated with a metal film. The period for the periodic arrangement in the present embodiment is the distance of a repeating unit consisting of the adjacent convex and concave. The distance of a repeating unit consisting of the adjacent convex and concave, i.e. the period P, is preferably 50 nm - 3000 nm, more preferably 200 nm - 1200 nm. The thickness of the metal film layer 14 on the surface of the convexes and/or the concaves is preferably 0 nm - 100 nm, most preferably 0 nm - 50 nm. The width of the convexes and/or the concaves arranged on the surface of the luminescent glass 13 is preferably 0.05P - 0.95P, most preferably 0.2P - 0.8P. The shape of the cross section of the convexes and/or the concaves is preferably at least one of triangle, square, rectangle, diamond, circle, oval, semi-circle, ring, and irregular shapes.

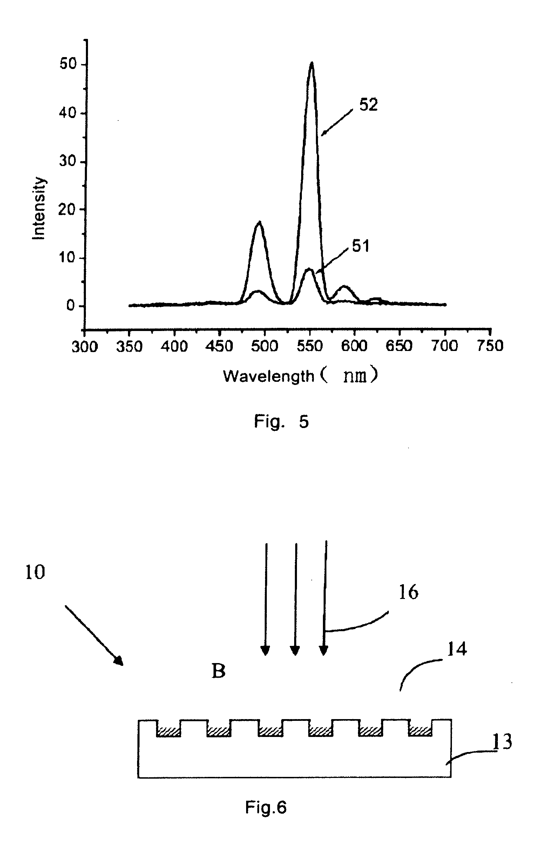

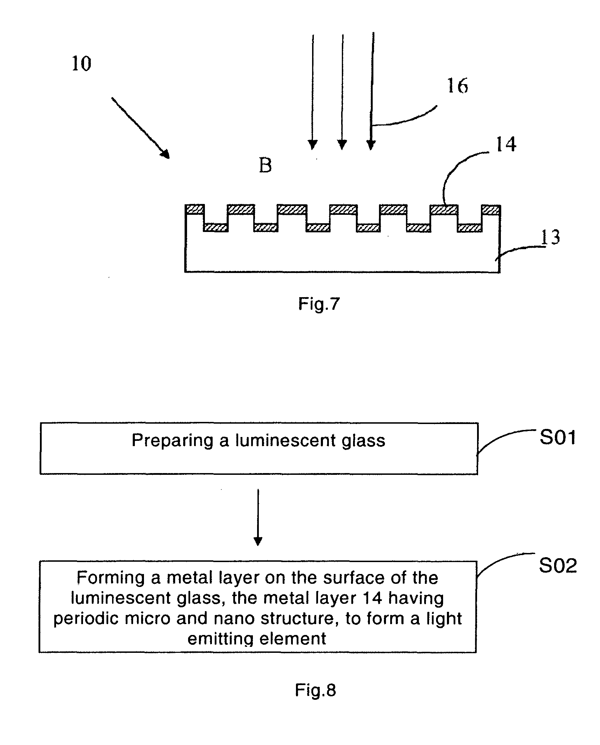

When the thickness of the metal layer 14 on the above convexes is 0 nm, the metal layer 14 is substantially distributed on the concaves which are periodically arranged on the surface of the luminescent glass 13. Accordingly, the periodically arranged metal layer 14 constitutes the periodic micro and nano structure, as shown in Figure 6. When the thickness of the metal layer 14 on the surfaces of both the convexes and the concaves which are periodically arranged on the surface of the luminescent glass 13 is above 0 nm, the structure is as shown in Figure 7, wherein the metal layer 14 is formed on the surface of both the convexes and the concaves, and the metal layer 14 formed on the surface of both the convexes and the concaves fluctuates with the surface of the convexes and the concaves, thereby constituting the periodic micro and nano structure. When the thickness of the metal layer 14 on the surface of the concaves which are periodically arranged on the surface of the luminescent glass 13 is 0 nm, the metal layer 14 is substantially distributed on the convexes which are periodically arranged on the surface of the luminescent glass 13. However, the thickness of the metal layer 14 on the surface of the convexes and that of the metal layer 14 on the surface of the concaves, which convexes and concaves are periodically arranged on the surface of the luminescent glass 13, cannot be both 0.

The metal layer 14 may be formed from a metal having good chemical stability, such as a metal which is hard to oxidize or corrode or from a commonly used metal, which is preferably at least one of gold, silver, aluminum, copper, titanium, iron, nickel, cobalt, chromium, platinum, palladium, magnesium, and zinc, more preferably at least one of gold, silver and aluminum. The metal species in the metal layer 14 may be a single metal or a composite metal. The composite metal may be an alloy of two or more of the above metals. For example, the metal layer 14 may be a silver-aluminum alloy layer or a gold-aluminum alloy layer, in which the weight fraction of silver or gold is preferably 70% or more.

In Figures 1 to 4 and 6 to 7, the light emitting element 10, as a light emitting element, may be widely used in superluminescent and high-speed operating light emitting devices, such as field emissive displays, field emissive light sources, or large advertisement panels. Taking field emissive displays as an example, a positive voltage is applied to the anode with respect to the field emissive arrays of the cathode to form an accelerating electric field, the cathode emits electrons, i.e. emitting cathode rays 16 to the metal layer 14, and surface plasmon is formed between the metal layer 14 having a periodic micro and nano structure and the luminescent glass 13. By the surface plasmon effect, the internal quantum efficiency of the luminescent glass 13 is greatly increased, i.e. the spontaneous radiation of the luminescent glass 13 is enhanced. Meanwhile, the metal layer 14 with the periodic structure would destruct the waveguide mode of the luminescent glass 13, leading to radiation of the photons with an incident angle greater than the total internal reflection angle. In other words, the light extraction efficiency of the luminescent glass 13 is increased, which significantly increases the total luminescent efficiency of the luminescent glass 13, thereby solving the problem of low luminescent efficiency of the luminescent material. Meanwhile, the metal layer 14 having the periodic micro and nano structure has good controllability and consistency, making it possible to control the surface plasmon by constructing the surface configuration of the metal structure and by regulating the size parameters. For example, by designing suitable surface configuration of the metal to match the resonance frequency of the surface plasmon with the radiation wavelength of the luminescent matrix, the internal quantum efficiency of the luminescent matrix may be significantly increased. Accordingly, by using the metal layer 14 having the periodic micro and nano structure, the problem of low luminescent efficiency for the current solid-state luminescent devices may be effectively solved, facilitating the development of new superluminescent and high-speed operating light emitting devices.

Referring to Figures 1 and 8, the procedure in a method for manufacturing the light emitting element in an embodiment of the present invention is illustrated, the method comprising the following steps:
S01: preparing a luminescent glass 13 which has a smooth surface or has periodically arranged convexes and concaves on the surface, the chemical constituent of the luminescent glass 13 being rare-earth-ion doped silicate.
S02: forming a metal layer 14 on the surface of the luminescent glass 13 to obtain the light emitting element 10, the metal layer 14 having a periodic micro and nano structure.

In step S01, the luminescent glass 13 may be prepared by a conventional method in the art. The convexes and concaves periodically arranged on the surface of the luminescent glass 13 may be formed by a currently used micro-processing method. In addition, the obtained glass may be further cut or polished to a certain size as required.

In step S02, the metal layer 14 is formed by depositing at least one of the above metals on the surface of the luminescent glass 13 by physical or chemical vapor deposition, for example but not limited to currently used micro-processing method, sputtering or evaporation. The metal layer 14 may be formed from a metal having good chemical stability, such as a metal which is hard to oxidize or corrode, or from a commonly used metal, which is preferably at least one of gold, silver, aluminum, copper, titanium, iron, nickel, cobalt, chromium, platinum, palladium, magnesium, and zinc, more preferably at least one of gold, silver and aluminum. The metal species in the metal layer 14 may be a single metal or a composite metal. The composite metal may be an alloy of two or more of the above metals. For example, the metal layer 14 may be a silver-aluminum alloy layer or a gold-aluminum alloy layer, in which the weight fraction of silver of gold is preferably 70% or more. The metal layer 14 having the periodic micro and nano structure is formed on the surface of the luminescent glass 13 by currently used micro-processing method. The period P for the metal layer 14 is preferably 50 nm - 3000 nm, more preferably 200 nm - 1200 nm. The thickness of the metal layer 14 depends on the shape and distribution of the metal layer 14 having the above periodic micro and nano structure. For the specific thickness, see the above four embodiments of the periodic micro and nano structure.

The light emitting element comprises a luminescent glass 13 and a metal layer 14 and this two-layer structure is simple. Meanwhile, a homogeneous interface is present between the luminescent glass 13 and the metal layer 14. Therefore, the light emitting element shows very high luminescent homogeneity and stability. In addition, after the preparation of the luminescent glass 13, the final product may be obtained by conducting a suitable micro-processing to the surface of the luminescent glass 13 as required and adding a metal layer 14 on the surface of the luminescent glass 13. Accordingly, the manufacturing process is simple, and requires only a small number of processing equipment. This leads to a low cost for manufacturing the light emitting element, which is suitable for the production in an industrial scale.

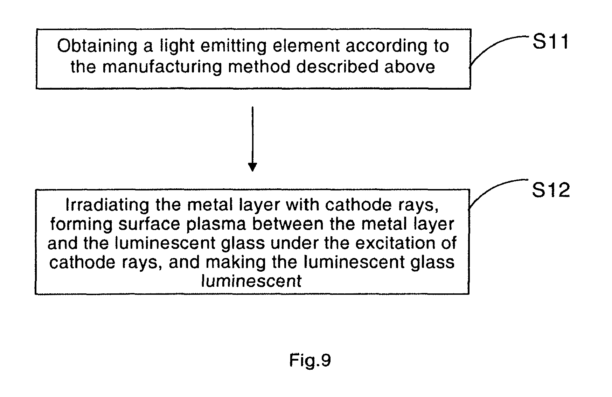

Referring to Figures 1 and 9, the procedure in a luminescent method of the light emitting element in an embodiment of the present invention is illustrated, the luminescent method comprising the following steps:
S11: obtaining a light emitting element 10 according to the manufacturing method described above;
S12: irradiating the metal layer 14 with cathode rays 16, part of the cathode rays passing through the metal layer 14 and exciting the luminescent glass 13 to emit lights, simultaneously forming surface plasmon between the metal layer 14 and the luminescent glass 13, and enhancing the luminescence of the luminescent glass 13.

The light emitting element 10 has the features of structure and composition described above. In actual applications, step S12 may be conducted by using a field emissive display or an illuminating source and applying a positive voltage to the anode with respect to the field emissive arrays of the cathode under vacuum to form an accelerating electric field. The cathode emits cathode rays 16. Under the excitation of the cathode rays 16, the electron beam passes through the metal layer 14 and excites the luminescent glass 13 to emit lights. During this process, surface plasmon effect occurs at the interface between the metal layer 14 and the luminescent glass 13. By this effect, the internal quantum efficiency of the luminescent glass 13 is greatly increased, i.e. the spontaneous radiation of the luminescent glass is enhanced. Meanwhile, the micro and nano structure of the metal layer would destruct the waveguide mode of the luminescent glass 13. In this way, the light extraction efficiency is increased, which significantly increases the total luminescent efficiency of the luminescent material.

Surface plasmon, (SP) is a wave traveling along the interface between the metal and the media, and the amplitude thereof decreases exponentially with the distance from the interface. When the surface structure of the metal is changed, the properties, chromatic dispersion relationship, excitation mode, coupling effect of the surface plasmon polaritons (SPPs) also change substantially. SPPs-induced electromagnetic field can not only restrict the propagation of the light wave in a structure having a sub-wavelength size, but also produce and control the electromagnetic radiation from light frequency to microwave range and thereby achieve an active control to the propagation of the light. Accordingly, the present embodiment utilizes the excitation effect of the SPPs to increase the photonic mode density of the luminescent glass 13 and enhance its spontaneous radiation rate. In addition, due to the coupling effect of the surface plasmon, when the luminescent glass 13 emits lights, a coupling resonance effect may occur, thereby greatly increasing the internal quantum efficiency of the luminescent glass 13. In addition, the periodic metal structure on the surface of the luminescent glass 13 would destruct the waveguide mode of the luminescent glass 13, leading to radiation of the photons with an incident angle greater than the total internal reflection angle, thereby increasing the light extraction efficiency of the luminescent glass 13. Accordingly, the total luminescent efficiency of the luminescent glass 13 is significantly increased.

Assuming that the angular frequency of the wavelength of the light emitted by the luminescent glass 13 is w, the dielectric constant of the metal layer 14 is εₘ, the dielectric constant of the dielectric B surrounding the metal layer 14 is ε_{b}, the wave number of the excited surface plasmon polaritons k_{SP} may be approximately determined from ksp=ω/(c(εₘε_{b}/(εₘ+ε_{b}))^{1/2}). Assuming that the refractive index of the luminescent glass 13 is ng, the value of the reciprocal lattice vector of the periodic structure is K, m is an integer, the incident angle of the light emitted from luminescent glass 13 to the interface between the metal layer 14 and the luminescent glass 13 is θᵢ, then the light meeting the requirement n_{g}(ω/c)sinθᵢ+mK=k_{SP} can excite the surface plasmon polaritons. Assuming the refractive index of the dielectric B is n_{b}, n is an integer, then the excited surface plasmon polaritons emit lights from the upper and lower surfaces in an angle θⱼ which meets the requirement n_{b}(ω/c)sinθⱼ=k_{SP}+nK.

Different compositions and manufacturing methods as well as the properties of the light emitting element are illustrated by referring to various Examples.

### Example 1

The basic structure of the glass light emitting element of the present Example having a metal film is shown in Figure 1. A green luminescent glass 13 having a size of 1 x 1 cm² and surface-polished with 30Na₂O·6Y₂O₃·60SiO₂.4Tb₂O₃ (the numbers before the oxides represent molar ratio) is selected, and a metal layer 14 having an orderly periodic structure formed by the combination of six triangular pyramid-shaped silver particles is formed on its surface with the currently used micro-processing technique. The structure scheme thereof is shown in Figure 3. The specific structural parameters are also shown in Figure 3. The height of the silver nano-particles is 30 nm. The luminescent glass 13 and the metal layer 14 constitute the light emitting element of the present Example.

The light emitting element manufactured in the present Example is bombarded with cathode rays produced by an electron gun. The electron beam passes through the metal layer 14 and then excites the luminescent glass 13 to emit lights with a luminescent spectrum shown in Figure 5. The curve 51 is the luminescent spectra of the luminescent glass 13 without a metal layer; and the curve 52 is the luminescent spectra of the luminescent glass 13 with a metal layer obtained according to the present Example. It can be seen from the figure that, due to the surface plasmon effect produced between the metal layer 14 and luminescent glass 13, the luminescent glass 13 with the metal structure according to the present Example shows a luminescent integrated intensity from 300 nm to 700 nm which is 5.5 times higher than that of the luminescent glass 13 without the metal layer 14, indicating a great improvement of the luminescent performance.

The luminescent spectra obtained in the following Examples are similar to those obtained in Example 1, and the light emitting elements show similar luminescent intensities, and therefore will not be described repeatedly.

### Example 2

The basic structure of the glass light emitting element of the present Example having a metal film is shown in Figure 1. A green luminescent glass 13 surface-polished with 30Na₂O·6Y₂O₃·60SiO₂·4Tb₂O₃ (the numbers before the oxides represent molar ratio) is used, and an array of cylindrical sliver nano-particles arranged in a square lattice as shown in Figure 4 is formed on its surface with the currently used micro-processing technique. These constitute the light emitting element of the present Example.

The periodic metal micro and nano structure make it possible to control the surface plasmon by constructing the surface configuration of the metal structure and by regulating the size parameters, and the enhancement to the luminescence is wavelength-selective. Taking the metal nano-array of the present Example as an example, assuming that the peak radiation wavelength of the luminescent glass 13 is A, the dielectric constant of the metal layer 14 is εₘ, and the dielectric constant of the dielectric B is ε_{b}, then the period P meeting the requirement λ=P x (εₘε_{b}/(εₘ+ε_{b}))^{1/2} would lead to the maximum enhancement of the luminescence. The surface plasmon resonant wavelength A of the periodic metal micro and nano structure is determined. The peak radiation wavelength of the luminescent glass 13 is about 549 nm (n=0.06+3.586i for silver), and the dielectric B is vacuum. The period P value calculated with the above equation is 527 nm. In addition, the diameter of the cylindrical metal particles is set as 200 nm, and the height is set as 30 nm. In this circumstance, the surface plasmon resonance frequency of the periodic metal structure coincides with the radiation wavelength of the luminescent glass 13, which makes it possible to obtain the highest photonic mode density at the surface of the luminescent glass 13, leading to a better coupling between the photons emitted by the luminescent glass 13 and the surface plasmon, increasing the internal quantum efficiency, and thereby increasing the luminescent efficiency of the light emitting element.

### Example 3

The basic structure of the glass light emitting element of the present Example having a metal film is shown in Figure 1. A red luminescent glass 13 as prepared by the above method and surface-polished with 30Na₂O·6Y₂O₃·60SiO₂·4Eu₂O₃ (the numbers before the oxides represent molar ratio) is used, and an aluminum layer having a periodic micro and nano structure as shown in Figure 1 is formed on its surface with the currently used micro-processing technique. The period of the structure is 700 nm. The size of the metal particles is 200 nm. The height of the metal layer 14 is 50 nm. The depth of the concaves to the surface of the metal layer 14 is 10 nm. These constitute the light emitting element of the present Example.

### Example 4

The basic structure of the glass light emitting element of the present Example having a metal film is shown in Figure 6. A blue luminescent glass 13 surface-polished with 30Na₂O·6Y₂O₃·60SiO₂·4Tm₂O₃ (the numbers before the oxides represent molar ratio) is used, and a layer of a periodic micro and nano structure is formed on its surface with the currently used micro-processing technique. The period P of the structure is 450 nm. The size of the concaves in the periodic micro and nano structure is 50 nm, and the depth is 40 nm. A platinum film having a thickness of 20 nm is formed in the concaves in the periodic micro and nano structure on the surface of the glass. These constitute the light emitting element of the present Example.

### Example 5

The basic structure of the glass light emitting element of the present Example having a metal film is shown in Figure 8. A white luminescent glass 13 as prepared by the above method and surface-polished with 30Na₂O·6Y₂O₃·60SiO₂·2Tm₂O₃·1Eu₂O₃·1Tb₂O₃ (the numbers before the oxides represent molar ratio) is used, and a periodic micro and nano structure is formed on its surface with the currently used micro-processing technique. The period of the micro and nano structure is 600 nm. In the periodic structure, the size of the convex is 300 nm and the depth of the concave is 100 nm. A magnesium film having a thickness of 10 nm is formed on the surface of the glass micro and nano structure. These constitute the light emitting element of the present Example.

The examples described above are only preferred embodiments of the present invention, and are not intended to limit the present invention. Any amendment, equivalent substitution and improvement within the spirit and principle of the present invention fall within the scope of the present invention.

## Claims

1. A light-emitting element, comprising a luminescent glass substrate, on the surface of which a metal layer is formed and has a periodic micro and nano structure, wherein the chemical constituent of the luminescent glass is rare-earth-ion doped silicate.

2. The light emitting element of Claim 1, wherein the periodic micro and nano structure is periodically arranged convexes.

3. The light emitting element of Claim 2, wherein the period P of the periodic arrangement is 50 nm - 3000 nm, the width of the convexes and/or the distance between two convexes is 0.05P - 0.95P, the height of the convexes is 0.5 nm - 200 nm, the thickness of the metal layer at the bottom between two convexes is 0 nm - 100 nm.

4. The light emitting element of Claim 1, wherein the periodic micro and nano structure is a periodically arranged metal grating or a metal layer film with periodically arranged holes thereon.

5. The light emitting element of Claim 4, wherein the period of the periodic arrangement is 50 nm - 3000 nm; the thickness of the metal layer film is above 0 and below 100 nm; and the diameter of the holes is 0.05P - 0.95P.

6. The light emitting element of Claim 1, wherein the luminescent glass has periodically arranged convexes and concaves on the surface, and the surface of the convexes and/or the concaves is coated with a metal film.

7. The light emitting element of Claim 6, wherein the period of the periodic arrangement is 50 nm - 3000 nm, the thickness of the metal layer on the surface of the convexes and/or the concaves is 0 nm - 100 nm, the width of the convexes and/or the concaves on the surface of the luminescent glass is 0.05P - 0.95P.

8. The light emitting element of Claim 1, wherein the metal for the metal layer is at least one of gold, silver, aluminum, copper, titanium, iron, nickel, cobalt, chromium, platinum, palladium, magnesium, and zinc.

9. A method for manufacturing a light emitting element, comprising the following steps:
preparing a luminescent glass which has a smooth surface or has periodically arranged convexes and concaves on the surface;
forming a metal layer having a periodic micro and nano structure on the surface of the luminescent glass, to obtain the light emitting element.

10. The method for manufacturing a light emitting element of Claim 9, wherein the metal layer is formed on the surface of the luminescent glass by sputtering or evaporation.

11. A method of illuminating a light emitting element, comprising the following steps:
obtaining a tight emitting element according to the manufacturing method of claim 9 or 10; and
irradiating the metal layer with cathode rays, forming surface plasmon between the metal layer and the luminescent glass under the excitation of cathode rays, and making the luminescent glass luminescent.

## Patentansprüche

1. Lichtemittierendes Element, umfassend ein Lumineszenzglas-Substrat, auf dessen Oberfläche eine Metallschicht gebildet ist, und das eine periodische Mikro- und Nanostruktur aufweist, wobei der chemische Bestandteil des Lumineszenzglases mit Seltenen-Erd-Ionen dotiertes Silicat ist.

2. Lichtemittierendes Element nach Anspruch 1, wobei die periodische Mikro- und Nanostruktur aus periodisch angeordneten Erhebungen besteht.

3. Lichtemittierendes Element nach Anspruch 2, wobei die Periode P der periodischen Anordnung 50 nm - 3.000 nm beträgt, die Breite der Erhebungen und/oder die Entfernung zwischen zwei Erhebungen 0,05 P - 0,95 P beträgt, die Höhe der Erhebungen 0,5 nm - 200 nm beträgt und die Dicke der Metallschicht am Boden zwischen zwei Erhebungen 0 nm - 100 nm beträgt.

4. Lichtemittierendes Element nach Anspruch 1, wobei die periodische Mikro- und Nanostruktur ein periodisch angeordnetes Metallgitter oder ein Metallschichtfilm mit periodisch darauf angeordneten Löchern ist.

5. Lichtemittierendes Element nach Anspruch 4, wobei die Periode der periodischen Anordnung 50 nm - 3.000 nm beträgt, die Dicke des Metallschichtfilms größer als 0 und geringer als 100 nm ist, und der Durchmesser der Löcher 0,05 P - 0,95 P beträgt.

6. Lichtemittierendes Element nach Anspruch 1, wobei das Lumineszenzglas auf der Oberfläche periodisch angeordnete Erhebungen und Ausnehmungen aufweist, und die Oberfläche der Erhebungen und/oder Ausnehmungen mit einem Metallfilm beschichtet ist.

7. Lichtemittierendes Element nach Anspruch 6, wobei die Periode der periodischen Anordnung 50 nm - 3.000 nm beträgt, die Dicke der Metallschicht auf der Oberfläche der Erhebungen und/oder Ausnehmungen 0 nm -100 nm beträgt, und die Breite der Erhebungen und/oder Ausnehmungen auf der Oberfläche des Lumineszenzglases 0,05 P - 0,95 P beträgt.

8. Lichtemittierendes Element nach Anspruch 1, wobei das Metall für die Metallschicht aus wenigstens einem von Gold, Silber, Aluminium, Kupfer, Titan, Eisen, Nickel, Kobalt, Chrom, Platin, Palladium, Magnesium und Zink besteht.

9. Verfahren zur Herstellung eines lichtemittierenden Elements, das die folgenden Schritte umfasst:
Vorbereiten eines Lumineszenzglases, das eine glatte Oberfläche oder periodisch angeordnete Erhebungen und Ausnehmungen auf der Oberfläche aufweist,
Bilden einer Metallschicht, die eine periodische Mikro- und Nanostruktur aufweist, auf der Oberfläche des Lumineszenzglases um das lichtemittierende Element zu erhalten.

10. Verfahren zur Herstellung eines lichtemittierenden Elements nach Anspruch 9, wobei die Metallschicht durch Aufsprühen oder Bedampfen auf der Oberfläche des Lumineszenzglases gebildet wird.

11. Verfahren zum Erleuchten eines lichtemittierenden Elements, das die folgenden Schritte umfasst:
Erhalten eines lichtemittierenden Elements gemäß des Herstellungsverfahrens von Anspruch 9 oder 10, und
Bestrahlen der Metallschicht mit Kathodenstrahlen, wobei sich zwischen der Metallschicht und dem Lumineszenzglas unter der Anregung mit Kathodenstrahlen Oberflächenplasmon bildet, und wodurch das Lumineszenzglas lumineszierend wird.

## Revendications

1. Elément émettant de la lumière, comprenant un substrat en verre luminescent, sur la surface duquel une couche de métal est formée et présente une micro- et une nanostructure périodique, dans lequel le constituant chimique du verre luminescent est un silicate dopé par un ion de terre rare.

2. Elément émettant de la lumière selon la revendication 1, dans lequel la micro- et la nanostructure périodique sont des convexes périodiquement disposés.

3. Elément émettant de la lumière selon la revendication 2, dans lequel la période P de la disposition périodique est de 50 nm - 3000 nm, la largeur des convexes et/ou la distance entre deux convexes est de 0,05P - 0,95P, la hauteur des convexes est de 0,5 nm - 200 nm, l'épaisseur de la couche de métal au fond entre deux convexes est de 0 nm - 100 nm.

4. Elément émettant de la lumière selon la revendication 1, dans lequel la micro- et la nanostructure périodique est une grille de métal périodiquement disposée ou un film de couche de métal avec des trous périodiquement disposés sur son dessus.

5. Elément émettant de la lumière selon la revendication 4, dans lequel la période de la disposition périodique est de 50 nm - 3000 nm ; l'épaisseur du film de couche de métal est supérieure à 0 et inférieure à 100 nm ; et le diamètre des trous est de 0,05P - 0,95P.

6. Elément émettant de la lumière selon la revendication 1, dans lequel le verre luminescent présente des convexes et concaves périodiquement disposés sur la surface, et la surface des convexes et/ou des concaves est revêtue avec un film de métal.

7. Elément émettant de la lumière selon la revendication 6, dans lequel la période de la disposition périodique est de 50 nm - 3000 nm, l'épaisseur de la couche de métal sur la surface des convexes et/ou des concaves est de 0 nm - 100 nm, la largeur des convexes et/ou des concaves sur la surface du verre luminescent est de 0,05P - 0,95P.

8. Elément émettant de la lumière selon la revendication 1, dans lequel le métal pour la couche de métal est au moins l'un des métaux suivants : or, argent, aluminium, cuivre, titane, fer, nickel, cobalt, chrome, platine, palladium, magnésium, et zinc.

9. Procédé de fabrication d'un élément émettant de la lumière, comprenant les étapes suivantes :
la préparation d'un verre luminescent qui présente une surface lisse ou qui présente des convexes et concaves périodiquement disposés sur la surface ;
la formation d'une couche de métal présentant une micro- et une nanostructure périodique sur la surface du verre luminescent, pour obtenir l'élément émettant de la lumière.

10. Procédé de fabrication d'un élément émettant de la lumière selon la revendication 9, dans lequel la couche de métal est formée sur la surface du verre luminescent par pulvérisation cathodique ou évaporation.

11. Procédé d'illumination d'un élément émettant de la lumière, comprenant les étapes suivantes :
l'obtention d'un élément émettant de la lumière selon le procédé de fabrication de la revendication 9 ou 10 ; et
l'irradiation de la couche de métal avec des rayons de cathode, la formation d'un plasmon de surface entre la couche de métal et le verre luminescent sous l'excitation des rayons de cathode, et l'action de rendre le verre luminescent luminescent.
